# EUROPEAN PATENT SPECIFICATION

(11) **EP 4 671 477 B1**
(45) Date of publication and mention of the grant of the patent: **11.11.2026**
(21) Application number: 25179595.1
(22) Date of filing: 28.05.2025
(51) Int. Cl.: E05F 15/43, E05F 15/73, E05F 15/79, G06V 40/20, G06V 20/52

(54) **DOOR CONTROLLER AND COMPUTER PROGRAM**
TÜRSTEUERUNG UND COMPUTERPROGRAMM
CONTRÔLEUR DE PORTE ET PROGRAMME INFORMATIQUE

(30) Priority: 27.06.2024 JP 2024103878
(43) Date of publication of application: 31.12.2025
(73) Proprietor: TOYOTA JIDOSHA KABUSHIKI KAISHA, Toyota-shi, Aichi-ken 471-8571 (JP)
(72) Inventor: YAMAZAKI, Masayuki, Toyota-shi, Aichi-ken 471-8571 (JP)
(74) Representative: Cabinet Beau de Loménie

(56) References cited:
- JP-A- 2017 124 899
- US-B1- 10 977 826

## Description

### FIELD

The present invention relates to a door controller for automatically controlling the opening/closing of a door and a computer program.

### BACKGROUND

A door controller for controlling the opening/closing of an elevator door based on actions of a user captured in captured images is known (refer to, for example, Patent Literature 1 (Japanese Unexamined Patent Publication (Kokai) No. 2017-124899)). This door controller is configured so as to analyze image data in a time series, estimate the presence or absence of user intent to board based on a time series change in the position of the user in the images and a movement speed of the user toward the door, and control a door opening/closing operation based on the estimation result.

According to the door controller described in Patent Literature 1, when the user moves toward the door at a speed which is equal to or greater than a threshold, it is determined that the user has an intent to board.

US 10 977 826 B1 discloses a safety detection camera system for door closure.

### SUMMARY

According to the door controller described in Patent Literature 1, when it is determined that the user intends to board during the closing operation of the door, the closing operation of the door is stopped and the door is controlled so as to remain open, and thus, when this is applied to a moving body, unnecessary delays in operation may occur. Furthermore, according to this door controller, since the door is forcibly closed when it is determined that the user intends to board and a preset allowable time has elapsed, there is a risk that an individual intending to board may come into contact with the door.

An object of the present invention is to provide a door controller and a computer program which can prevent delays while executing opening/closing control based on the actions of a user.

### [SOLUTION TO PROBLEM]

An aspect of the present invention provides a door controller as defined in claim 1 Another aspect of the invention provides a computer program installed on a computer provided in a door controller according to claim 5.

According to the present invention, it is possible to prevent delays while executing opening/closing control based on the actions of a user.

### BRIEF DESCRIPTION OF DRAWINGS

FIG. 1 is a block diagram showing the configuration of a door controller according to an embodiment.
FIG. 2 is a view detailing an imaging range of an external camera.
FIG. 3 is a view showing a plurality of blocks set in a predetermined area included in an imaging range.
FIG. 4 is a view showing a method for calculating movement vectors and scalar components.
FIG. 5 is a view showing an actual position relationship between a moving object and a reference position.
FIG. 6 is a view showing a positional relationship between a moving object and a reference position in a captured image.
FIG. 7 is a view showing a method for correcting scalar components.
FIG. 8 is a view showing a map of scalar component correction coefficients.
FIG. 9 is a view showing a first threshold map.
FIG. 10 is a view showing a second threshold map.
FIG. 11 is a flowchart showing the flow of processing of a door control method executed in the door controller.

### DESCRIPTION OF EMBODIMENTS

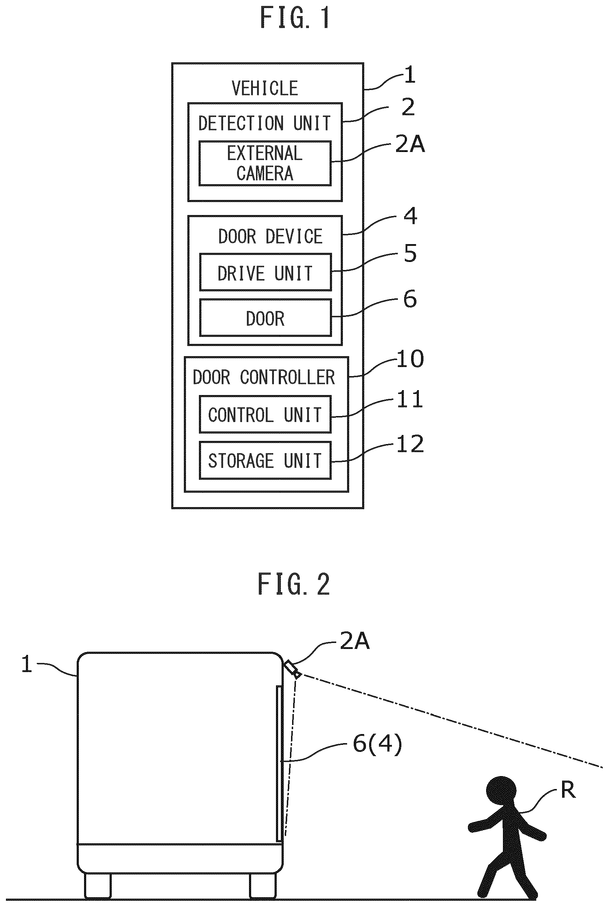

As shown in FIGS. 1 and 2, a vehicle 1 comprises a door device 4 which can be automatically opened and closed. The vehicle 1 comprises a door controller 10 for controlling the door device 4. The vehicle 1 comprises a detection unit 2 for detecting detection values for controlling the door device 4. The vehicle 1 is, for example, a bus vehicle that transports users. The vehicle 1 may be an autonomous vehicle or a manually driven vehicle. The detection unit 2, the door device 4, and the door controller 10 constitute a door system.

The detection unit 2 is constituted by an external camera 2A for capturing images of the vehicle exterior and generating image data. The external camera 2A outputs the image data to the door controller 10. The external camera 2A captures a plurality of frame images per unit time based on a predetermined frame rate (for example, 30 fps) and generates image data serving as video. The external camera 2A outputs the image data to the door controller 10. The detection unit 2 may be constituted by not only the external camera 2A but also a lidar device or a radar device as long as it can detect the external environment of the vehicle 1.

The external camera 2A includes, for example, a wide-angle lens for capturing the exterior of the vehicle 1. The external camera 2A captures images of a predetermined range from an area adjacent to the door device 4 outside the vehicle 1. The external camera 2A is provided, for example, at a position outside the vehicle 1 where it can capture an image of a predetermined range away from the door device 4.

The door device 4 includes, for example, a door 6 which can be freely opened and closed. The door 6 opens and closes based on, for example, a sliding opening and closing mechanism. The door 6 may also be opened and closed based on a folding door or pivoting door opening and closing mechanism. The door 6 is driven to open and close by a drive unit 5. The drive unit 5 is an actuator including the mechanism for opening and closing the door 6. The drive unit 5 is controlled by the door controller 10. The drive unit 5 is configured to open and close the door 6 by, for example, sliding. The drive unit 5 may also be configured to open and close the door 6 in a pivoting door or folding door manner. The drive unit 5 may be constituted using any mechanism as long as it can drive the door 6 to open and close.

The door controller 10 includes a control unit 11 for controlling the opening/closing of the door 6 based on the detection values detected by the detection unit 2. The control unit 11 is composed of at least one hardware processor such as a CPU (Central Processing Unit). The door controller 10 includes a storage unit 12 for storing data and programs. The storage unit 12 is composed of a non-transitory storage medium such as a hard disk drive (HDD) or a solid-state disk (SSD). The storage unit 12 stores computer programs and data necessary for the opening/closing control of the door 6.

The control unit 11 is configured so as to be able to recognize the image data using, for example, artificial intelligence (AI). The control unit 11 is configured so as to be able to recognize the contents of the image data by, for example, executing machine learning based on deep learning or optical flow using the image data as teacher data in advance. The control unit 11 is configured so as to be able to recognize the environment near the door 6 and the user present near the door 6 based on the image data captured by the detection unit 2. The control unit 11 is configured to control the opening/closing of the door 6 when it recognizes the approach of the user to the door 6.

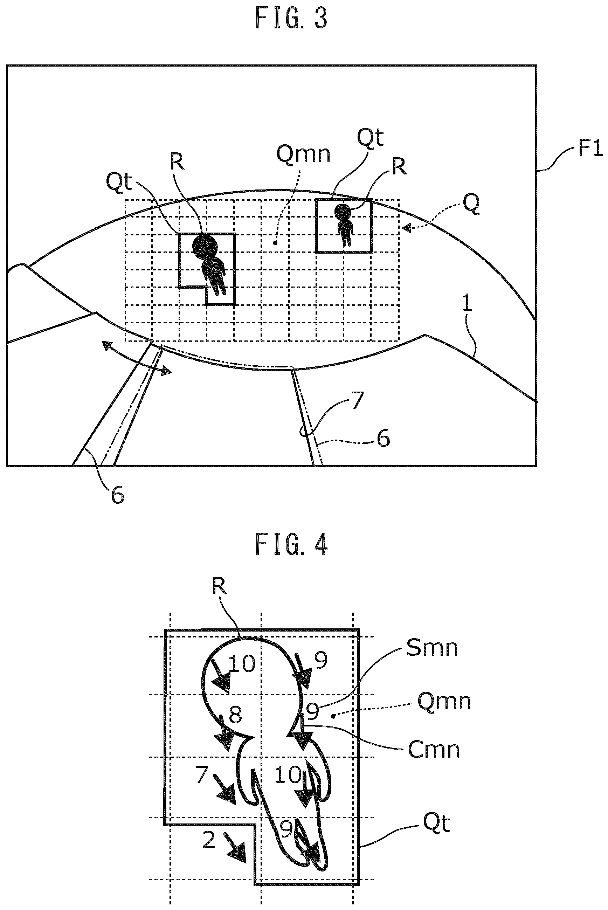

FIG. 3 shows a frame image F1 included in the image data captured by the external camera 2A. The image data is video data including a plurality of frame images within a predetermined unit time based on a predetermined frame rate. The frame image F1 includes a predetermined imaging range outside the vehicle 1. For example, the frame image F1 captures an opening 7, the door 6 provided in the opening 7, and the external environment of the vehicle 1 including the door 6. The frame image F1 is, for example, image data in which a wide-angle imaging range is captured.

The frame image F1 includes a predetermined imaging range of the external area of the opening 7. In the illustrated example, the position is farther away from the door 6 moving upward in the frame image F1, and the position is closer to the door 6 moving toward the door 6 in the frame image F1.

The control unit 11 executes the opening/closing control of the door 6 based on the image data. The control unit 11 analyzes a plurality of frame images F1 included in the image data in a time series. The control unit 11 sets a rectangular predetermined area Q in the imaging range of the frame image F1. The predetermined area Q may have shapes other than rectangular. The control unit 11 divides the predetermined area Q into a plurality of blocks Qmn (m and n are natural numbers corresponding to the coordinates) of image components arranged in a matrix.

The control unit 11 extracts one or more moving objects R moving toward the opening 7 from within a predetermined area Q included in the imaging range. The moving objects R are mainly users who intend to board the vehicle 1. The extraction processing of the moving objects R by the control unit 11 is as described below.

As shown in FIG. 4, the control unit 11 compares, for example, the frame image F1 at a time t with the frame image F1 at time t+Δt, and calculates a movement vector Cmn of the moving image components in the time series in each block Qmn. The control unit 11 executes dense optical flow estimation by, for example, calculating the movement trajectory of the coordinates for all pixels in each block Qmn. The control unit 11 averages the movement trajectories of the coordinates of all pixels to calculate the movement vector Cmn in each block Qmn.

The control unit 11 converts, among the calculated movement vectors Cmn, the movement vector toward the door 6 (opening 7) into scalar components Smn. The control unit 11 compares the scalar components Smn of each block Qmn with a threshold. The control unit 11 extracts scalar components Smn which are equal to or greater than the threshold as moving object blocks. In the illustrated example, the threshold is set to 7. The control unit 11 groups adjacent blocks Qmn having scalar components which are equal to or greater than the threshold, and generates an aggregate Qt. The control unit 11 recognizes the aggregate Qt as a moving object R. The control unit 11 determines that an isolated block Qmn among the blocks Qmn having scalar components which have been calculated is moving object noise, and removes it.

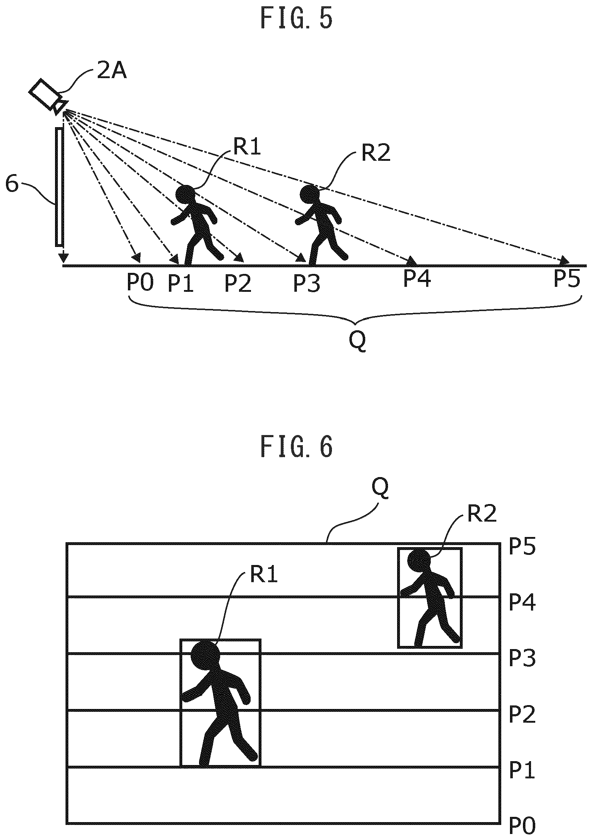

FIG. 5 shows a side view of the relationship between the actual position of the moving objects R and a predetermined area Q included in the frame image F1 captured by the external camera 2A. A plurality of reference positions P0 to P5 are set in the predetermined area Q. The reference positions P0 to P5 are set so that the subscripts increase from closer to the door 6 to farther. The number of reference positions P0 to P5 is an example, and may be increased or decreased. Each of the reference positions P0 to P5 is set corresponding to an actual distance from the door 6.

FIG. 6 shows the relationship between the predetermined area Q and the reference positions P0 to P5 in the frame image F1. In the frame image F1, for example, the lower limit position (for example, the position of the toes) of the moving object R1 is present at the reference position P1. The lower limit position of the moving object R1 is treated as one of the closest relative positions to the door 6 (refer to FIG. 5). In the frame image F1, for example, the lower limit position (for example, the position of the toes) of the moving object R2 is present at the reference position P3. The lower limit position of the moving object R2 is treated as one of the closest relative positions to the door 6 (refer to FIG. 5). The control unit 11 calculates the position of the moving object based on the positional relationship between the lower limit position of the moving object R2 in the frame image F1 and the reference positions P0 to P5.

In the frame image F1, the moving object R1, which is at a position closer to door 6, is displayed larger than the moving object R2, which is at a position farther from door 6 than the moving object R1. The scalar components Smn (refer to FIG. 4) of the block Qmn calculated by control unit 11 appear smaller the farther away from the door 6 the block Qmn is in the predetermined area Q of the frame image F1. Thus, the control unit 11 corrects the scalar components Smn of the block Qmn in predetermined area Q so that it increases the farther away the block Qmn is from the door 6.

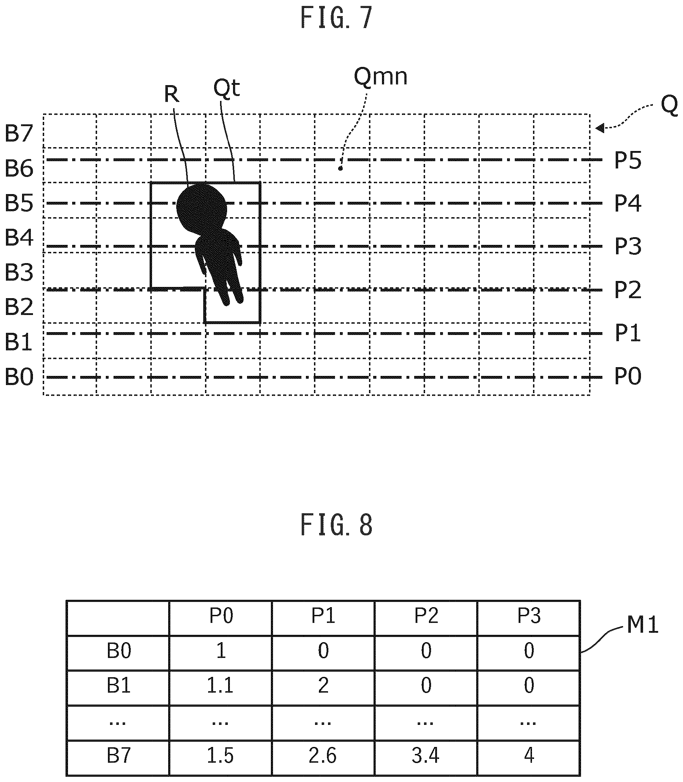

FIG. 7 shows row numbers set for a plurality of blocks Qmn in row units in the predetermined area Q, and reference positions P0 to P5. The subscripts of the row numbers B0 to B7 are set to increase the farther away from the door 6. The number of row numbers is an example, and may be changed as appropriate depending on the number of blocks Qmn set in the predetermined area Q.

FIG. 8 shows the reference positions P0 to P5 of the lower limit position of the aggregate Qt and a map M1 of the correction coefficient applied to the scalar components Smn of each block Qmn included in the aggregate Qt. When the reference positions P0 to P5 of the lower limit position of the aggregate Qt are determined, the scalar components Smn of each block Qmn included in the aggregate Qt are multiplied by the correction coefficient in the reference position of the map M1. The correction coefficient is set so that it becomes larger the farther the reference positions P0 to P5 of the lower limit position of the aggregate Qt are from door 6, and the farther each block Qmn is from the door 6.

In the example of FIG. 7, the lower limit position of the aggregate Qt is the reference position P1, and the scalar components Smn of the bottom block Qmn of the aggregate Qt are multiplied by the correction coefficient of row number B2 for the reference position P1 based on the map M1, and the scalar components Smn of the top block Qmn of the aggregate Qt are multiplied by the correction coefficient of row number B5 for the reference position P1.

The control unit 11 calculates corrected scalar components by correcting the scalar components in accordance with the relationship between the position of the block Qmn included in the aggregate Qt and the lower limit position of the aggregate Qt based on the map M1. The control unit 11 averages the corrected scalar components included in the aggregate Qt and calculates a movement amount evaluation parameter for evaluating the movement amount of the moving object R. The movement amount evaluation parameter is an evaluation parameter corresponding to the movement amount of the moving object R between frame images with different capture timings (i.e., between the time differences in the capture timings). The movement amount evaluated in accordance with the movement amount evaluation parameter is the movement amount per unit time (for example, the time interval between the capture timings of consecutive frame images). Specifically, the movement amount evaluation parameter can be considered to be equivalent to the movement speed of the moving object R. The movement amount evaluation parameter can be used to evaluate the movement speed of the moving object R.

When the control unit 11 recognizes one or more moving objects R, it executes the following processing for each moving object R. Based on the evaluation results of the movement amount using the position of the moving object R and the movement amount evaluation parameter, the control unit 11 determines whether the moving object R will arrive at the opening 7 before a predetermined timing. The predetermined timing is, for example, the time for starting the closing operation of the door. The predetermined timing is set in accordance with, for example, the departure time of the vehicle 1. The control unit 11 starts the closing operation of the door 6 from the predetermined timing (for example, several seconds before) a predetermined time before the departure time, and ends the closing operation of the door 6 when the predetermined time has elapsed, and closes the door 6. The predetermined time may be appropriately adjusted in accordance with the environment in which the vehicle 1 is present.

When the control unit 11 determines based on the analysis results of the frame image F1 that a moving object R which will arrive before the predetermined timing is not present, the control unit 11 executes the closing operation of the door 6 at the predetermined timing. When the control unit 11 determines based on the analysis results of the frame image F1 that a moving object R which will arrive before the predetermined timing is present, the control unit 11 restricts the closing operation of the door 6. If the momentum of movement of the moving object R, such as a rushing passenger, is excessive, there is a risk regarding the magnitude of impact when the door 6 and the moving object R come into contact with each other. Based on the first comparison result between the movement amount evaluation parameter and a first threshold, the control unit 11 determines whether or not a moving object which is moving by a predetermined amount or more is present in order to extract a moving object having excessive momentum of movement. The control unit 11 determines, for example, whether the movement amount evaluation parameter is equal to or greater than the first threshold, and determines whether a moving object having an excessive momentum is present. The method of comparison with the first threshold is exemplary, and other comparison methods may be used as long as they can be used to determine the risk of contact between the moving object R and the door 6.

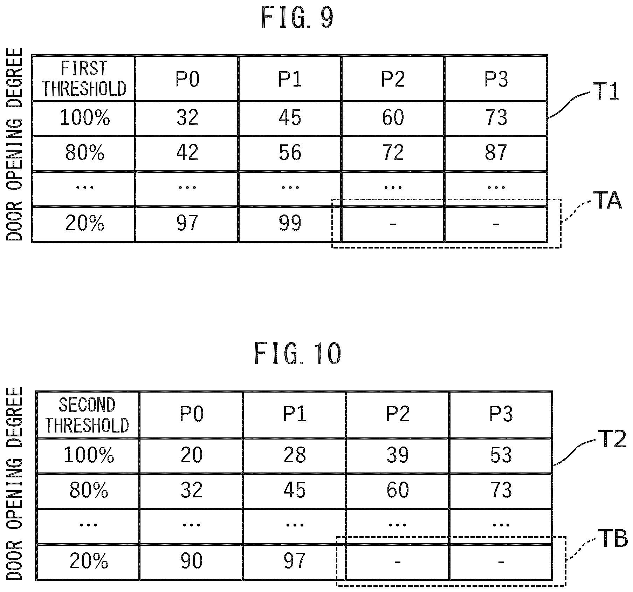

FIG. 9 shows a first threshold map T1 in which the first threshold is set. The first threshold is set for extracting moving objects having excessive momentum. The first threshold is used to determine whether a moving object which is moving by an amount equal to or greater than a predetermined amount is present. Since a moving object which is moving by an amount equal to or greater than a predetermined amount has excessive momentum, there is a risk that the impact will be greater when it comes into contact with the door than a moving object which is moving by an amount less than the predetermined amount. The first threshold is set based on, for example, the relationship between the movement amount of the moving object R, the reference position of the moving object R, and the opening degree of the door 6. For example, the first threshold is set so that the greater the opening degree of the door 6, the lower the first threshold, and the smaller the opening degree of the door 6, the higher the first threshold, at the same reference position.

For example, for the same opening degree of the door 6, the first threshold is set so as to be higher as the reference position moves away from the door 6. For example, the first threshold is set so as to be lower as the opening degree of the door 6 increases and the reference position of moving object R moves closer to the door 6, and the first threshold is set so as to be higher as the opening degree of the door 6 decreases and the reference position of moving object R moves away from the door 6.

When the movement amount evaluation parameter is equal to or greater than the first threshold based on the first determination result, the control unit 11 evaluates that the momentum of the moving object R is excessive. Based on the evaluation results, the control unit 11 stops the closing operation of the door 6 and executes an opening operation to reduce the risk of contact between the moving object R and the door 6. The control unit 11 opens the door 6 and allows the moving object R (user) to pass through the opening 7.

FIG. 10 shows a second threshold map T2 in which a second threshold is set. The second threshold is used to determine whether the moving object R will arrive before the predetermined timing. The second threshold is set to a value lower than the first threshold. The second threshold is set based on the relationship between the movement speed at which the moving object R may come into contact with the door 6, the reference position of the moving object R, and the opening degree of the door 6. For example, at the same reference position, the second threshold is set so as to be lower as the opening degree of the door 6 increases and higher as the opening degree of the door 6 decreases.

For example, for the same opening degree of the door 6, the second threshold is set so as to be higher as the reference position moves away from the door 6. For example, the second threshold is set so as to be lower as the opening degree of the door 6 increases and the reference position of the moving object R moves closer to the door 6, and the second threshold is set so as to be higher as the opening degree of the door 6 decreases and the reference position of the moving object R moves away from the door 6. A region TB where the second threshold exceeds 100 is used to determine that the moving object R will not arrive before the predetermined timing.

The control unit 11 determines whether the moving object R will arrive before the predetermined timing based on a second comparison result between the movement amount evaluation parameter and the second threshold. When the movement amount evaluation parameter is equal to or greater than the second threshold, the control unit 11 determines that the moving object R will arrive before the predetermined timing, stops the closing operation of the door 6 during a stop time in accordance with the position of the moving object R, and maintains the state of the door 6 until the predetermined timing. At this time, the control unit 11 may output a predetermined notification content based on sound, an image, etc., from a notification unit (not illustrated) provided in the vehicle 1 to notify the driver or passengers of the vehicle 1 that the vehicle 1 will be placed on standby.

The control unit 11 stops the closing operation of the door 6 and allows the moving object R (user) to pass through the opening 7. When the control unit 11 determines that the opening degree of the door 6 is low and that simply stopping the opening operation of the door 6 will cause contact between the moving object R and the door 6 or that it is difficult for the moving object R to pass through the opening 7, the control unit 11 may stop the closing operation of the door 6 and execute the opening operation.

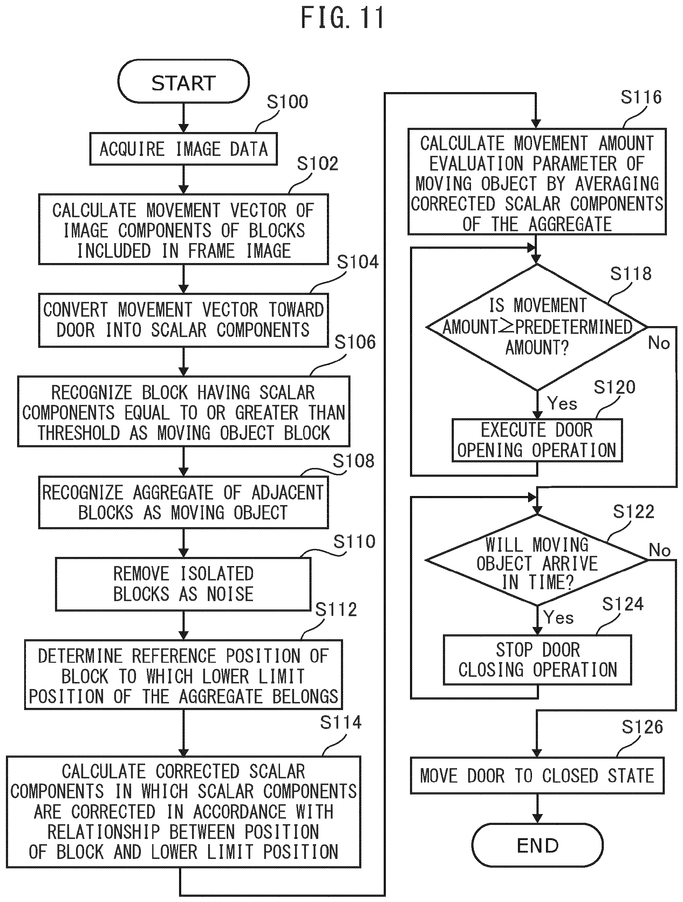

FIG. 11 shows the flow of processing of the door control method executed by the door controller 10. The door control method is executed based on a computer program installed in a computer mounted in the door controller 10. The computer program causes the door controller 10 to execute the following processing.

The control unit 11 acquires image data captured by the external camera 2A within a predetermined imaging range of the external area relative to the opening (step S100). The control unit 11 divides the predetermined area included in the frame image F1 into image components in units of a plurality of blocks Qmn, and calculates a movement vector Cmn of the image components moving in the blocks Qmn (step S102). The control unit 11 converts the movement vector Cmn in the direction toward the door 6 into scalar components Smn (step S104). The control unit 11 recognizes blocks having scalar components Smn which are equal to or greater than a threshold as moving object blocks (step S106).

The control unit 11 recognizes the aggregate of adjacent moving object blocks as the moving object R (step S108). The control unit 11 removes isolated blocks having scalar components which are equal to or greater than the threshold as noise (step S110). The control unit 11 determines the reference position of the block to which the lower limit position (the position closest to the door 6) of the aggregate belongs (step S112). The control unit 11 calculates corrected scalar components by correcting the scalar components in accordance with the relationship between the position of the block included in the aggregate and the lower limit position of the aggregate (step S114). The control unit 11 averages the corrected scalar components included in the aggregate to calculate the movement amount evaluation parameter of the moving object R (step S116).

Based on a first comparison result between the movement amount evaluation parameter and the first threshold (refer to FIG. 9), the control unit 11 determines whether a moving object having a movement amount which is equal to or greater than the predetermined amount is present as a moving object with excessive momentum (step S118). When the control unit 11 determines that a moving object having a movement amount equal to or greater than the predetermined amount is present, the control unit 11 stops the closing operation of the door 6 and executes an opening operation (step S120) as there is a risk that the momentum of the moving object is excessive and the impact when it comes into contact with the door will be significant. When the control unit 11 determines that a moving object having a movement amount equal to or greater than the predetermined amount is not present, the control unit 11 determines whether a moving object which will arrive before the predetermined timing is present based on a second comparison result between the movement amount evaluation parameter and the second threshold (refer to FIG. 10) (step S122).

When the control unit 11 determines that a moving object R will arrive before the predetermined timing, it stops the closing operation of the door 6 (step S124). When the control unit 11 determines that a moving object R will not arrive before the predetermined timing, it executes the closing operation of the door 6 and puts the door 6 into the closed state (step S126).

As described above, the door controller 10 can prevent delays of the vehicle 1 while executing opening/closing control based on the actions of users captured in the image data. The door controller 10 can appropriately evaluate the movement of the user captured in the image data by correcting in accordance with the position of the user in the image data. The door controller 10 can simplify the device configuration by recognizing the movement of the user based on the image data without using special sensors other than a camera.

In the embodiment described above, the computer program executed by each component of the door controller 10 may be provided in a form recorded on a portable, computer-readable, non-transitory recording medium such as a semiconductor memory, a magnetic recording medium, or an optical recording medium. The present invention is not limited to the embodiment described, and may be appropriately modified without departing from the present invention as defined in the appended claims.

## Claims

1. A door controller (10), comprising a processor (11) for executing opening/closing control of a door (6) provided in an opening (7) based on image data in which there is captured a predetermined imaging range of an external area relative to the opening (7), wherein the processor (11) is configured to execute the following processing:
analyze the image data according to time series,
extract one or more moving objects (R) which are moving toward the opening (7) from within a predetermined area (Q) included in the imaging range,
evaluate movement amounts of the moving objects (R) toward the opening (7),
restrict a closing operation of the door (6) when it is determined that a moving object (R) which is moving by a predetermined amount or more is present based on evaluation results of the movement amounts, and
execute a closing operation of the door (6) at a preset predetermined timing when it is determined that a moving object (R) which is moving by a predetermined amount or more is not present and a moving object (R) which will reach the opening (7) before the predetermined timing is not present based on the evaluation results of the movement amounts,
**characterized in that** the processor (11) is configured to:
divide the predetermined area (Q) included in the image data into image components of a plurality of blocks (Qmn),
calculate a movement vector (Cmn) of the image components that move in the time series in the block (Qmn),
convert the movement vector (Cmn) in the direction toward the door (6) into scalar components (Smn),
generate an aggregate (Qt) of adjacent blocks (Qmn) by grouping adjacent blocks (Qmn) having scalar components (Smn) which are equal or greater than a threshold, and recognize the aggregate (Qt) as a moving object (R),
determine a reference position (P0-P5) of a lower limit position of the aggregate,
calculate corrected scalar components (Smn) in which the scalar components (Smn) are corrected in accordance with a relationship between a position of the block (Qmn) included in the aggregate and the lower limit position of the aggregate based on a map (M1) of a correction coefficient to be applied to the scalar components, wherein the correction coefficient is set so that it becomes larger the farther the reference position (P0-P5) is from the door (6), and the farther each block (Qmn) is from the door (6),
calculate a movement amount evaluation parameter of the moving object (R) by averaging the corrected scalar components (Smn) included in the aggregate,
determine whether a moving object (R) moving by a predetermined amount or more is present based on a first comparison result between the movement amount evaluation parameter and a first threshold, and
determine whether the moving object (R) will arrive before the predetermined timing based on a second comparison result between the movement amount evaluation parameter and a second threshold.

2. The door controller (10) according to claim 1, wherein the processor (11) is configured to:
restrict a closing operation of the door (6) when it is determined that a moving object (R) which will reach the opening (7) before the predetermined timing is present based on the evaluation results of the movement amounts.

3. The door controller (10) according to claim 2, wherein the processor (11) is configured to:
stop a closing operation of the door (6) and execute an opening operation when it is determined that a moving object (R) which is moving by a predetermined amount or more is present based on the first comparison result.

4. The door controller (10) according to claim 2 or 3, wherein the processor (11) is configured to:
stop a closing operation of the door (6) when it is determined that the moving object (R) will arrive before the predetermined timing based on the second comparison result.

5. A computer program installed on a computer provided in a door controller (10) for executing opening/closing control of a door (6) provided in an opening based on image data in which there is captured a predetermined imaging range of an external area relative to the opening (7), wherein the computer program causes the computer to execute the following processing based on an installed computer program:
analyze the image data according to time series,
extract one or more moving objects (R) which are moving toward the opening (7) from within a predetermined area (Q) included in the imaging range,
evaluate movement amounts of the moving objects (R) toward the opening (7),
restrict a closing operation of the door (6) when it is determined that a moving object (R) which is moving by a predetermined amount or more is present based on evaluation results of the movement amounts, and
execute a closing operation of the door (6) at a preset predetermined timing when it is determined that a moving object (R) which is moving by a predetermined amount or more is not present and a moving object (R) which will reach the opening (7) before the predetermined timing is not present based on the evaluation results of the movement amounts,
the computer program being **characterized in that** causes the computer to execute:
divide the predetermined area (Q) included in the image data into image components of a plurality of blocks (Qmn),
calculate a movement vector (Cmn) of the image components that move in the time series in the block (Qmn),
convert the movement vector (Cmn) in the direction toward the door (6) into scalar components (Smn),
generate an aggregate (Qt) of adjacent blocks (Qmn) by grouping adjacent blocks (Qmn) having scalar components (Smn) which are equal or greater than a threshold, and recognize the aggregate (Qt) as a moving object (R),
determine a reference position (P0-P5) of a lower limit position of the aggregate,
calculate corrected scalar components (Smn) in which the scalar components (Smn) are corrected in accordance with a relationship between a position of the block (Qmn) included in the aggregate and the lower limit position of the aggregate (Qt) based on a map (M1) of a correction coefficient to be applied to the scalar components, wherein the correction coefficient is set so that it becomes larger the farther the reference position (P0-P5) is from the door (6), and the farther each block (Qmn) is from the door (6),
calculate a movement amount evaluation parameter of the moving object (R) by averaging the corrected scalar components (Smn) included in the aggregate,
determine whether a moving object (R) moving by a predetermined amount or more is present based on a first comparison result between the movement amount evaluation parameter and a first threshold, and
determine whether the moving object (R) will arrive before the predetermined timing based on a second comparison result between the movement amount evaluation parameter and a second threshold.

## Patentansprüche

1. Türsteuerung (10), umfassend einen Prozessor (11) zum Durchführen einer Öffnungs-/Schließ-Steuerung einer Tür (6), die in einer Öffnung (7) bereitgestellt wird, basierend auf Bilddaten, in denen ein vorbestimmter Bildgebungsbereich einer externen Fläche im Verhältnis zu der Öffnung (7) aufgenommen ist, wobei der Prozessor (11) dazu konfiguriert ist, die folgende Verarbeitung durchzuführen:
Analysieren der Bilddaten gemäß Zeitreihen,
Extrahieren eines oder mehrerer sich bewegender Objekte (R), die sich in Richtung auf die Öffnung (7) bewegen, aus einer vorbestimmten Fläche (Q), die in dem Bildgebungsbereich enthalten ist,
Bewerten von Bewegungsbeträgen der sich bewegenden Objekte (R) in Richtung auf die Öffnung (7),
Einschränken eines Schließvorgangs der Tür (6), wenn bestimmt wird, dass ein sich bewegendes Objekt (R), das sich um einen vorbestimmten Betrag oder mehr bewegt, vorhanden ist, basierend auf den Bewertungsergebnissen der Bewegungsbeträge, und
Durchführen eines Schließvorgangs der Tür (6) zu einem voreingestellten vorbestimmten Zeitpunkt, wenn bestimmt wird, dass kein sich bewegendes Objekt (R), das sich um einen vorbestimmten Betrag oder mehr bewegt, vorhanden ist, und dass kein sich bewegendes Objekt (R), das die Öffnung (7) vor dem vorbestimmten Zeitpunkt erreichen wird, vorhanden ist, basierend auf den Bewertungsergebnissen der Bewegungsbeträge,
**dadurch gekennzeichnet, dass** der Prozessor (11) konfiguriert ist zum:
Unterteilen der vorbestimmten Fläche (Q), die in den Bilddaten enthalten ist, in Bildkomponenten einer Vielzahl von Blöcken (Qmn),
Berechnen eines Bewegungsvektors (Cmn) der Bildkomponenten, die sich in der Zeitreihe in dem Block (Qmn) bewegen,
Konvertieren des Bewegungsvektors (Cmn) in der Richtung zu der Tür (6) hin in skalare Komponenten (Smn),
Erzeugen eines Aggregats (Qt) von angrenzenden Blöcken (Qmn) durch Gruppieren von angrenzenden Blöcken (Qmn), die skalare Komponenten (Smn) aufweisen, die gleich oder größer als eine Schwelle sind, und Erkennen des Aggregats (Qt) als ein sich bewegendes Objekt (R),
Bestimmen einer Referenzposition (P0-P5) einer unteren Grenzposition des Aggregats,
Berechnen von korrigierten skalaren Komponenten (Smn), bei denen die skalaren Komponenten (Smn) gemäß einer Beziehung zwischen einer Position des Blocks (Qmn), der in dem Aggregat enthalten ist, und der unteren Grenzposition des Aggregats basierend auf einer Karte (M1) eines Korrekturkoeffizienten, der auf die skalaren Komponenten anzuwenden ist, korrigiert werden, wobei der Korrekturkoeffizient derart eingestellt wird, dass er umso größer wird, je weiter die Referenzposition (P0-P5) von der Tür (6) entfernt ist und je weiter jeder Block (Qmn) von der Tür (6) entfernt ist,
Berechnen eines Bewegungsbetrags-Bewertungsparameters des sich bewegenden Objekts (R) durch Mitteln der korrigierten skalaren Komponenten (Smn), die in dem Aggregat enthalten sind,
Bestimmen, ob ein sich bewegendes Objekt (R), das sich um einen vorbestimmter Betrag oder mehr bewegt, vorhanden ist, basierend auf einem ersten Vergleichsergebnis zwischen dem Bewegungsbetrags-Bewertungsparameter und einer ersten Schwelle, und
Bestimmen, ob das sich bewegende Objekt (R) vor dem vorbestimmten Zeitpunkt ankommen wird, basierend auf einem zweiten Vergleichsergebnis zwischen dem Bewegungsbetrags-Bewertungsparameter und einer zweiten Schwelle.

2. Türsteuerung (10) nach Anspruch 1, wobei der Prozessor (11) konfiguriert ist zum:
Einschränken eines Schließvorgangs der Tür (6), wenn bestimmt wird, dass ein sich bewegendes Objekt (R), das die Öffnung (7) vor dem vorbestimmten Zeitpunkt erreichen wird, vorhanden ist, basierend auf den Bewertungsergebnissen der Bewegungsbeträge.

3. Türsteuerung (10) nach Anspruch 2, wobei der Prozessor (11) konfiguriert ist zum:
Anhalten eines Schließvorgangs der Tür (6) und Durchführen eines Öffnungsvorgangs, wenn bestimmt wird, dass ein sich bewegendes Objekt (R), das sich um einen vorbestimmten Betrag oder mehr bewegt, vorhanden ist, basierend auf dem ersten Vergleichsergebnis.

4. Türsteuerung (10) nach Anspruch 2 oder 3, wobei der Prozessor (11) konfiguriert ist zum:
Anhalten eines Schließvorgangs der Tür (6), wenn bestimmt wird, dass das sich bewegende Objekt (R) vor dem vorbestimmter Zeitpunkt ankommen wird, basierend auf dem zweiten Vergleichsergebnis.

5. Computerprogramm, das auf einem Computer installiert ist, der in einer Türsteuerung (10) zum Durchführen einer Öffnungs-/Schließ-Steuerung einer Tür (6) bereitgestellt wird, die in einer Öffnung bereitgestellt wird, basierend auf Bilddaten, in denen ein vorbestimmter Bildgebungsbereich einer externen Fläche im Verhältnis zu einer Öffnung (7) aufgenommen ist, wobei das Computerprogramm den Computer dazu veranlasst, die folgende Verarbeitung basierend auf einem installierten Computerprogramm durchzuführen:
Analysieren der Bilddaten gemäß Zeitreihen,
Extrahieren eines oder mehrerer sich bewegender Objekte (R), die sich in Richtung auf die Öffnung (7) bewegen, aus einer vorbestimmten Fläche (Q), die in dem Bildgebungsbereich enthalten ist,
Bewerten von Bewegungsbeträgen der sich bewegenden Objekte (R) in Richtung auf die Öffnung (7),
Einschränken eines Schließvorgangs der Tür (6), wenn bestimmt wird, dass ein sich bewegendes Objekt (R), das sich um einen vorbestimmten Betrag oder mehr bewegt, vorhanden ist, basierend auf den Bewertungsergebnissen der Bewegungsbeträge, und
Durchführen eines Schließvorgangs der Tür (6) zu einem voreingestellten vorbestimmten Zeitpunkt, wenn bestimmt wird, dass kein sich bewegendes Objekt (R), das sich um einen vorbestimmten Betrag oder mehr bewegt, vorhanden ist, und dass kein sich bewegendes Objekt (R), das die Öffnung (7) vor dem vorbestimmten Zeitpunkt erreichen wird, vorhanden ist, basierend auf den Bewertungsergebnissen der Bewegungsbeträge,
wobei das Computerprogramm **dadurch gekennzeichnet ist, dass** es den Computer veranlasst zum:
Unterteilen der vorbestimmten Fläche (Q), der in den Bilddaten enthalten ist, in Bildkomponenten einer Vielzahl von Blöcken (Qmn),
Berechnen eines Bewegungsvektors (Cmn) der Bildkomponenten, die sich in der Zeitreihe in dem Block (Qmn) bewegen,
Konvertieren des Bewegungsvektors (Cmn) in der Richtung zu der Tür (6) hin in skalare Komponenten (Smn),
Erzeugen eines Aggregats (Qt) von angrenzenden Blöcken (Qmn) durch Gruppieren von angrenzenden Blöcken (Qmn), die skalare Komponenten (Smn) aufweisen, die gleich oder größer als eine Schwelle sind, und Erkennen des Aggregats (Qt) als ein sich bewegendes Objekt (R),
Bestimmen einer Referenzposition (P0-P5) einer unteren Grenzposition des Aggregats,
Berechnen von korrigierten skalaren Komponenten (Smn), bei denen die skalaren Komponenten (Smn) gemäß einer Beziehung zwischen einer Position des Blocks (Qmn), der in dem Aggregat enthalten ist, und der unteren Grenzposition des Aggregats (Qt), basierend auf einer Karte (M1) eines Korrekturkoeffizienten, der auf die skalaren Komponenten anzuwenden ist, korrigiert werden, wobei der Korrekturkoeffizient derart eingestellt wird, dass er umso größer wird, je weiter die Referenzposition (P0-P5) von der Tür (6) entfernt ist und je weiter jeder Block (Qmn) von der Tür (6) entfernt ist,
Berechnen eines Bewegungsbetrags-Bewertungsparameters des sich bewegenden Objekts (R) durch Mitteln der korrigierten skalaren Komponenten (Smn), die in dem Aggregat enthalten sind,
Bestimmen, ob ein sich bewegenden Objekt (R), das sich um einen vorbestimmter Betrag oder mehr bewegt, vorhanden ist, basierend auf einem ersten Vergleichsergebnis zwischen dem Bewegungsbetrags-Bewertungsparameter und einer ersten Schwelle, und
Bestimmen, ob das sich bewegende Objekt (R) vor dem vorbestimmten Zeitpunkt ankommen wird, basierend auf einem zweiten Vergleichsergebnis zwischen dem Bewegungsbetrags-Bewertungsparameter und einer zweiten Schwelle.

## Revendications

1. Dispositif de commande de porte (10), comprenant un processeur (11) pour exécuter une commande d'ouverture/de fermeture d'une porte (6) prévue dans une ouverture (7) sur la base de données d'image dans lesquelles est capturée une plage d'imagerie prédéterminée d'une zone externe par rapport à l'ouverture (7), dans lequel le processeur (11) est configuré pour exécuter le traitement suivant :
analyser les données d'image suivant des série temporelle,
extraire un ou plusieurs objets mobiles (R) qui se déplacent vers l'ouverture (7) à partir d'une zone (Q) prédéterminée incluse dans la plage d'imagerie,
évaluer des quantités de déplacement des objets mobiles (R) vers l'ouverture (7),
restreindre une opération de fermeture de la porte (6) lorsqu'il est déterminé qu'un objet mobile (R) se déplaçant d'une quantité prédéterminée ou plus est présent sur la base de résultats d'évaluation des quantités de déplacement, et
exécuter une opération de fermeture de la porte (6) à un moment prédéterminé prédéfini lorsqu'il est déterminé qu'aucun objet mobile (R) se déplaçant d'une quantité prédéterminée ou plus n'est présent et qu'aucun objet mobile (R) susceptible d'atteindre l'ouverture (7) avant le moment prédéterminé n'est présent sur la base des résultats d'évaluation des quantités de déplacement,
**caractérisé en ce que** le processeur (11) est configuré pour :
diviser la zone (Q) prédéterminée incluse dans les données d'image en composantes d'image d'une pluralité de blocs (Qmn),
calculer un vecteur de déplacement (Cmn) des composantes d'image se déplaçant dans la série temporelle dans le bloc (Qmn),
convertir le vecteur de déplacement (Cmn) dans le sens allant vers la porte (6) en composantes scalaires (Smn),
générer un agrégat (Qt) de blocs (Qmn) adjacents en regroupant les blocs (Qmn) adjacents dont les composantes scalaires (Smn) sont égales ou supérieures à un seuil, et reconnaître l'agrégat (Qt) comme un objet mobile (R),
déterminer une position de référence (P0-P5) d'une position de limite inférieure de l'agrégat,
calculer des composantes scalaires (Smn) corrigées dont les composantes scalaires (Smn) sont corrigées conformément à une relation entre une position du bloc (Qmn) inclus dans l'agrégat et la position de limite inférieure de l'agrégat sur la base d'une carte (M1) d'un coefficient de correction à appliquer aux composantes scalaires, dans lequel le coefficient de correction est défini de sorte qu'il augmente à mesure que la position de référence (P0-P5) s'éloigne de la porte (6) et que chaque bloc (Qmn) s'éloigne de la porte (6),
calculer un paramètre d'évaluation de quantité de déplacement de l'objet mobile (R) en faisant la moyenne des composantes scalaires (Smn) corrigées incluses dans l'agrégat,
déterminer si un objet mobile (R) se déplaçant d'une quantité prédéterminée ou plus est présent sur la base d'un premier résultat de comparaison entre le paramètre d'évaluation de quantité de déplacement et un premier seuil, et
déterminer si l'objet mobile (R) arrivera avant le moment prédéterminé sur la base d'un deuxième résultat de comparaison entre le paramètre d'évaluation de quantité de déplacement et un deuxième seuil.

2. Dispositif de commande de porte (10) selon la revendication 1, dans lequel le processeur (11) est configuré pour :
restreindre une opération de fermeture de la porte (6) lorsqu'il est déterminé qu'un objet mobile (R) qui atteindra l'ouverture (7) avant le moment prédéterminé est présent sur la base des résultats d'évaluation des quantités de déplacement.

3. Dispositif de commande de porte (10) selon la revendication 2, dans lequel le processeur (11) est configuré pour :
arrêter une opération de fermeture de la porte (6) et exécuter une opération d'ouverture lorsqu'il est déterminé qu'un objet mobile (R) se déplaçant d'une quantité prédéterminée ou plus est présent sur la base du premier résultat de comparaison.

4. Dispositif de commande de porte (10) selon la revendication 2 ou 3, dans lequel le processeur (11) est configuré pour :
arrêter une opération de fermeture de la porte (6) lorsqu'il est déterminé que l'objet mobile (R) arrivera avant le moment prédéterminé sur la base du deuxième résultat de comparaison.

5. Programme informatique installé sur un ordinateur prévu dans un dispositif de commande de porte (10) pour exécuter une commande d'ouverture/de fermeture d'une porte (6) prévue dans une ouverture sur la base de données d'image dans lesquelles est capturée une plage d'imagerie prédéterminée d'une zone externe par rapport à l'ouverture (7), dans lequel le programme informatique amène l'ordinateur à exécuter le traitement suivant sur la base d'un programme informatique installé :
analyser les données d'image suivant des série temporelle,
extraire un ou plusieurs objets mobiles (R) qui se déplacent vers l'ouverture (7) à partir d'une zone (Q) prédéterminée incluse dans la plage d'imagerie,
évaluer des quantités de déplacement des objets mobiles (R) vers l'ouverture (7),
restreindre une opération de fermeture de la porte (6) lorsqu'il est déterminé qu'un objet mobile (R) se déplaçant d'une quantité prédéterminée ou plus est présent sur la base de résultats d'évaluation des quantités de déplacement, et
exécuter une opération de fermeture de la porte (6) à un moment prédéterminé prédéfini lorsqu'il est déterminé qu'aucun objet mobile (R) se déplaçant d'une quantité prédéterminée ou plus n'est présent et qu'aucun objet mobile (R) susceptible d'atteindre l'ouverture (7) avant le moment prédéterminé n'est présent sur la base des résultats d'évaluation des quantités de déplacement,
le programme informatique étant **caractérisé en ce qu'**il amène l'ordinateur à exécuter les opérations suivantes :
diviser la zone (Q) prédéterminée incluse dans les données d'image en composantes d'image d'une pluralité de blocs (Qmn),
calculer un vecteur de déplacement (Cmn) des composantes d'image se déplaçant dans la série temporelle dans le bloc (Qmn),
convertir le vecteur de déplacement (Cmn) dans le sens allant vers la porte (6) en composantes scalaires (Smn),
générer un agrégat (Qt) de blocs (Qmn) adjacents en regroupant les blocs (Qmn) adjacents dont les composantes scalaires (Smn) sont égales ou supérieures à un seuil, et reconnaître l'agrégat (Qt) comme un objet mobile (R),
déterminer une position de référence (P0-P5) d'une position de limite inférieure de l'agrégat,
calculer des composantes scalaires (Smn) corrigées dont les composantes scalaires (Smn) sont corrigées conformément à une relation entre une position du bloc (Qmn) inclus dans l'agrégat et la position de limite inférieure de l'agrégat (Qt) sur la base d'une carte (M1) d'un coefficient de correction à appliquer aux composantes scalaires, dans lequel le coefficient de correction est défini de sorte qu'il augmente à mesure que la position de référence (P0-P5) s'éloigne de la porte (6) et que chaque bloc (Qmn) s'éloigne de la porte (6),
calculer un paramètre d'évaluation de quantité de déplacement de l'objet mobile (R) en faisant la moyenne des composantes scalaires (Smn) corrigées incluses dans l'agrégat,
déterminer si un objet mobile (R) se déplaçant d'une quantité prédéterminée ou plus est présent sur la base d'un premier résultat de comparaison entre le paramètre d'évaluation de quantité de déplacement et un premier seuil, et
déterminer si l'objet mobile (R) arrivera avant le moment prédéterminé sur la base d'un deuxième résultat de comparaison entre le paramètre d'évaluation de quantité de déplacement et un deuxième seuil.
